# EUROPÄISCHE PATENTSCHRIFT

(11) **EP 3 847 498 B1**
(45) Veröffentlichungstag und Bekanntmachung des Hinweises auf die Patenterteilung: **22.06.2022**
(21) Anmeldenummer: 19753316.9
(22) Anmeldetag: 09.08.2019
(51) Int. Cl.: G02B 27/00, G02B 27/01

(54) **ANZEIGEVORRICHTUNG MIT EINEM SELBSTLEUCHTENDEN BILDSCHIRMELEMENT, KRAFTFAHRZEUG MIT EINER ANZEIGEVORRICHTUNG, SOWIE ZUGEHÖRIGES BETRIEBSVERFAHREN**
DISPLAY APPARATUS COMPRISING A SELF-ILLUMINATED SCREEN ELEMENT, MOTOR VEHICLE COMPRISING A DISPLAY APPARATUS, AND ASSOCIATED OPERATING METHOD
DISPOSITIF D'AFFICHAGE AVEC UN ÉLÉMENT D'ÉCRAN AUTO-ÉCLAIRANT, VÉHICULE AUTOMOBILE DOTÉ D'UN DISPOSITIF D'AFFICHAGE, ET PROCÉDÉ DE FONCTIONNEMENT ASSOCIÉ

(30) Priorität: 07.09.2018 DE 102018215264
(43) Veröffentlichungstag der Anmeldung: 14.07.2021
(73) Patentinhaber: Audi AG, 85045 Ingolstadt (DE)
(72) Erfinder: ZACHAR, Andrej, 82108 Bratislava (SK); HÉLOT, Jacques, 85051 Ingolstadt (DE); MERTENS, Joris, 85051 Ingolstadt (DE)
(86) Internationale Anmeldenummer: PCT/EP2019/071423
(87) Internationale Veröffentlichungsnummer: WO 2020/048733

(56) Entgegenhaltungen:
- WO-A1-2018/001605
- WO-A1-2018/134004
- WO-A1-2018/153766
- DE-A1- 3 822 222
- DE-A1-102012 010 679
- DE-A1-102013 004 395
- DE-A1-102014 214 510
- DE-A1-102016 221 072

## Beschreibung

Die Erfindung betrifft ein Kraftfahrzeug aufweisend eine ■ Anzeigevorrichtung, also ein Gerät oder eine Gerätekomponente zum Anzeigen von Bildinhalten. Die Anzeigevorrichtung weist ein selbstleuchtendes Bildschirmelement zum Anzeigen eines Anzeigeinhaltes oder Bildinhaltes auf. Die Erfindung betrifft ebenfalls ein Kraftfahrzeug mit einer solchen Anzeigevorrichtung, und ein Verfahren zum Betreiben eines Kraftfahrzeugs.

In modernen Kraftfahrzeugen besteht aufgrund einer wachsenden Anzahl von Entertainmentfunktionen und Betriebsinformationen des Kraftfahrzeugs der Bedarf, eine möglichst großflächige oder mehrere Anzeigevorrichtungen bereitzustellen, so genannte "Displays". Hierzu kann zum Beispiel ein Head-up-Display im Kraftfahrzeug verortet sein, wie beispielhaft durch die DE 38 22 222 A1 beschrieben. In dem dort beschriebenen Head-up-Display ist ein linearer Polarisationsfilter oder eine Jalousiefolie vorgeschlagen, die eine besonders hohe Lichttransmission aufweist. Diese wird implementiert, um keine Doppelbilder zu sehen wie bei einem üblichen Head-up-Display-Bild.

Alternative Displays sind beispielsweise durch die DE 10 2016 221 072 A1, die DE 101 40 688 A1 und die WO 2018/153766 beschrieben. Die DE 10 2016 221 072 A1 schlägt zur blickwinkelabhängigen Darstellung einer grafischen Benutzerschnittstelle vor, unterschiedliche Darstellungen der gleichen Bild- und/oder Bedieninhalte in verschiedenen Blickwinkeln anzuzeigen, wobei mindestens ein Bedienelement für unterschiedliche Blinkwinkel die gleiche Funktion ausübt und/oder an der gleichen Position auf der dargestellten grafischen Benutzerschnittstelle verortet ist. Bevorzugt ist dabei die Darstellung auf einem Dual-View-Display.

Die DE 10 140 688 A1 beschreibt bei einer Anzeigeeinheit für ein Kraftfahrzeug ein Dot-Matrix-Display, das ein optisches Element aufweist, durch das aus einem ersten Blickwinkel nur jede zweite Spalte von Darstellungen und aus einem zweiten Blickwinkel nur Darstellungen der jeweils dazwischen liegenden Spalten sichtbar sind.

Falls nur ein Display zum Beispiel gegenüber einer Fensterscheibe angeordnet ist, spiegelt sich das Display in der Fensterscheibe des Kraftfahrzeugs. Der Anzeigeinhalt kann so nicht optimal wahrgenommen werden. Sind mehrere Oberflächen als Anzeigefläche gewünscht, muss an jeder der Oberflächen jeweils ein Display angeordnet werden. Hierbei ergibt sich ebenfalls nachteilhaft, dass sich das eine Display in einem anderen Display spiegelt. Außerdem wird bei mehreren Displays sehr viel Bauraum benötigt, und es sind zur Ansteuerung mehrere Verkabelungen an Fixpunkten notwendig. Daraus ergibt sich auch eine visuelle Komplexität.

Eine der Erfindung zugrunde liegende Aufgabe ist das Verbessern einer Sichtbarkeit von Anzeigeinhalten und das Einsparen von Bauraum.

Die gestellte Aufgabe wird durch die erfindungsgemäßen Vorrichtungen und das erfindungsgemäße Verfahren gemäß den nebengeordneten Patentansprüchen gelöst. Vorteilhafte Weiterbildungen sind durch die Unteransprüche gegeben.

Die Anzeigevorrichtung weist ein selbstleuchtendes Bildschirmelement zum Anzeigen eines Anzeigeinhaltes auf, wobei eine Anzeigefläche des selbstleuchtenden Bildschirmelements durch einen Knickbereich in einen ersten Anzeigebereich und in einen zweiten Anzeigebereich eingeteilt ist.

Mit anderen Worten ist die Anzeigefläche - und damit das selbstleuchtende Bildschirmelement - geknickt oder gefaltet. Der Knickbereich kann auch als Faltbereich oder Knickelement (oder Faltelement) bezeichnet werden. Mit anderen Worten ist die Anzeigefläche des selbstleuchtenden Bildschirmelements nicht planar und, im Gegensatz zu einer Krümmung, nur im Knickbereich gewölbt, oder im Knickbereich stärker gewölbt als eine an sich gewölbte Anzeigefläche.

Mit anderen Worten kann die Anzeigefläche einen ersten Anzeigebereich und einen zweiten Anzeigebereich definieren, das heißt die Anzeigefläche wird in einen ersten Anzeigebereich und in einen zweiten Anzeigebereich unterteilt.

Zum Beispiel kann die Anzeigefläche in einem Winkel von kleiner als 180° geknickt sein. In einer alternativen, genauso vorteilhaften Ausführungsform kann die Anzeigefläche in dem Knickbereich oder Faltbereich um mehr als 180° geknickt sein.

Die Anzeigevorrichtung weist außerdem eine selektive Abschirmeinheit auf, welche Licht von dem Bildschirmelement einerseits entlang einer Vorzugsrichtung durchlässt und andererseits entlang einer (von der Vorzugsrichtung unterschiedlichen) Sperrrichtung blockiert und/oder aus der Sperrrichtung auslenkt.

Die selektive Abschirmeinheit kann zum Beispiel als Shutterfolie oder Filterscheibe ausgestaltet sein. Alternativ oder zusätzlich kann die Abschirmeinheit Lamellen oder Waben aufweisen. Lamellen können das Licht des Bildschirms in einer Raumebene in die Vorzugsrichtung ausrichten. Waben wirken dagegen rundum, das heißt es kann das Licht in zwei senkrecht zueinander ausgerichteten Raumebenen in die Vorzugsrichtung ausrichten. Eine Höhe der Lamellen oder Waben kann vorzugsweise größer als 0,5 Millimeter sein. Lamellen sind dabei in der Regel sehr dünn.

Als Anzeigeinhalt kann beispielsweise ein Videobild und/oder zumindest ein pixelbasiertes oder segmentbasiertes Grafikelement angezeigt werden. Als selbstleuchtendes Bildschirmelement wird ein Bauteil verstanden, dass, vorzugsweise, Licht emittiert, und einen Anzeigeinhalt ausgibt. Das Bildschirmelement kann einen Bildschirm aufweisen, oder zusammen mit der Abschirmeinheit einen Bildschirm bilden. Das Bildschirmelement kann zum Beispiel ein LCD-Bildschirm ("Liquid Crystal Display") oder ein OLED-Bildschirm (Organic Light Emitting Diode Display) umfassen, oder als elektronisches Papier, MikroLED-Bildschirm, TFT-Bildschirm ("thin-film transistor display", Dünnschichttransistor) oder segmentierter LCD-Bildschirm ausgestaltet sein.

Durch den Knickbereich in der Anzeigefläche ist von einem Betrachtungspunkt eines Benutzers nur der Anzeigeinhalt einer der beiden Anzeigebereiche sichtbar, während der Anzeigeinhalt des anderen Anzeigebereichs nicht sichtbar ist. Die Kombination aus dem Knick und der selektiven Abschirmeinheit ergibt synergistisch, dass aus verschiedenen Betrachtungspunkten, also aus verschiedenen Blickwinkeln, unterschiedliche Anzeigebereiche gesehen werden können, wodurch mit Hilfe von nur einer Anzeigevorrichtung auf geringem Bauraum Anzeigeflächen für zum Beispiel unterschiedliche Anzeigeinhalte bereitgestellt und/oder mehrere Verwendungszwecke ermöglicht werden. Ist eine solche Anzeigevorrichtung zum Beispiel an/in einem Innenraumverkleidungsteil eines Kraftfahrzeugs angeordnet und einem reflektieren Oberflächenbereich zugewandt, zum Beispiel einer Fensterscheibe oder einer lackierten A-Säule, kann dieser Oberflächenbereich als Anzeigefläche genutzt werden, ohne dass eine zweite Anzeigevorrichtung verwendet und verbaut werden muss. Hierdurch ergibt sich eine wesentliche Ersparnis in Bezug auf den Bauraum.

Ist die Anzeigefläche derart geknickt oder gefaltet, dass sich die beiden Anzeigebereiche einander zuwenden, wird durch die Kombination der selektiven Abschirmeinheit mit dem Knickbereich vermieden, dass sich der eine Anzeigebereich in dem anderen Anzeigebereich spiegelt. Eine Sichtbarkeit und Lesbarkeit eines Anzeigeinhaltes wird dadurch entscheidend erhöht.

Außerdem können Innenraumverkleidungsteile des Kraftfahrzeugs verwendet werden, die bisher eher ungünstig für einen Bildschirm sind. Beispielsweise ein Innenraumverkleidungsteil, dessen Oberfläche einer Windschutzscheibe zugewandt ist, kann nun zum Verbau der Anzeigevorrichtung verwendet werden, da sich der Anzeigenbereich auf dieser Fläche in der Windschutzscheibe spiegelt. Ein Benutzer kann so problemlos die Reflexion des einen Anzeigebereichs sehen, sowie direkt auf den anderen Anzeigebereich schauen, wodurch nicht nur eine Ergonomie verbessert wird, sondern eine Handhabung der Anzeigevorrichtung deutlich vereinfacht und verbessert wird.

Bei einer Implementierung in einem Kraftfahrzeug kann eine solche Anzeigevorrichtung auch gleichzeitig zur Information des Benutzers in einem Innenraum des Kraftfahrzeugs, sowie für einen Benutzer außerhalb des Kraftfahrzeugs verwendet werden. Dies ist zum Beispiel dann der Fall, wenn ein dem Benutzer im Innenraum zugewendeter Anzeigebereich Informationen zu zum Beispiel dem Kraftfahrzeug oder einem Fahrmodus gibt, und ein einer Scheibe zugewandter Anzeigebereich eine Information für den Benutzer außerhalb des Kraftfahrzeugs ausgibt, zum Beispiel eine Parkzeit oder eine Information, dass das Kraftfahrzeug zur Zeit gebucht und nicht frei ist. Hierdurch kann für den nach außen ausgestrahlten Informationsinhalt eine Privatsphäre erhöht werden, da durch die Wirkweise der selektiven Abschirmeinheit nur solche Benutzer den Anzeigeinhalt sehen können, die nahe am Kraftfahrzeug stehen und aus dem entsprechenden Betrachtungspunkt auf den Anzeigebereich sehen. Für den Benutzer im Innenraum adressierte persönliche Informationen auf dem dem Benutzer im Innenraum zugwandten Anzeigebereich sind vor neugierigen Blicken von, je nach Blickwinkel, den meisten Benutzern außerhalb des Kraftfahrzeugs geschützt.

Weitere Vorteile sind, neben der Integration mehrerer Anzeigeflächen in einer Anzeigevorrichtung, ein integriertes Design und die Möglichkeit von kostengünstigen Anzeigeflächen. Im Designaspekt ist die erfindungsgemäße Anzeigevorrichtung ästhetisch sehr ansprechend. Das Display ist nahezu spannungslos, sodass keine oder wenig Spannung auf Metallkontakte ausgeübt wird.

Eine besonders gute Sichtbarkeit und Lesbarkeit bei einer Anordnung auf zum Beispiel einer Schalttafel eines Kraftfahrzeugs ergibt sich, falls der Knickbereich, gemäß einer bevorzugten Ausführungsform der erfindungsgemäßen Anzeigevorrichtung, einen Winkel von 45° bis inklusive 80° definiert oder aufweist, vorzugsweise einen Winkel von 60° bis inklusive 80°.

Die oben gestellte Aufgabe wird gelöst durch ein Kraftfahrzeug mit einer Ausführungsform der erfindungsgemäßen Anzeigevorrichtung. Das Kraftfahrzeug kann vorzugsweise als Kraftwagen ausgestaltet sein, zum Beispiel als Personenkraftwagen.

Das Kraftfahrzeug weist einen von dem Bildschirm der Anzeigevorrichtung beabstandeten Oberflächenbereich auf, auf welchem von einem vorbestimmten Betrachtungspunkt aus eine Reflexion des auf dem zweiten Anzeigebereich angezeigten Anzeigeinhaltes sichtbar ist. Mit anderen Worten sind das selbstleuchtende Bildschirmelement und der Oberflächenbereich derart zueinander angeordnet, dass durch die selektive Abschirmeinheit Licht des zweiten Anzeigebereichs auf den Oberflächenbereich gelenkt wird. Mit anderen Worten sind der selbstleuchtende Bildschirm und der Oberflächenbereich derart zueinander angeordnet, dass von dem vorbestimmten Betrachtungspunkt oder Blickwinkel aus die Reflexion des auf dem zweiten Anzeigebereich angezeigten Anzeigeinhaltes sichtbar ist.

Dabei ist die Vorzugsrichtung der selektiven Abschirmeinheit im zweiten Anzeigebereich auf den Oberflächenbereich und die Sperrrichtung im zweiten Anzeigebereich auf den vorbestimmten Betrachtungspunkt ausgerichtet.

Es ergeben sich die bereits oben genannten Vorteile. Durch die selektive Abschirmeinheit wird der auf dem ersten Anzeigebereich angezeigte Anzeigeinhalt nicht auf den Oberflächenbereich gelenkt, sondern direkt in das Auge des Betrachters, also direkt zum Betrachtungspunkt, spiegelt sich jedoch nicht in dem Oberflächnebereich.

Dementsprechend ergeben sich die Vorteile einer Ausführungsform des erfindungsgemäßen Kraftfahrzeugs, wonach die Anzeigevorrichtung derart im Kraftfahrzeug angeordnet ist, sodass im ersten Anzeigebereich die Vorzugsrichtung der selektiven Abschirmeinheit auf den vorbestimmten Betrachtungspunkt und die Sperrrichtung auf den Oberflächenbereich ausgerichtet ist.

Die Vorteile einer weiteren Ausführungsform, bei der das selbstleuchtende Bildschirmelement an einem Innenraumverkleidungsteil oder Innenraumverkleidungselement des Kraftfahrzeugs angeordnet sein kann, wurden bereits oben diskutiert. Vorzugsweise kann hierbei die geknickte Anzeigefläche mit einer geknickten Oberfläche des Innenraumverkleidungsteils übereinstimmen. Mit anderen Worten können vorzugsweise das Bildschirmelement oder die Kombination von Bildschirmelement und Abschirmeinheit in einer direkten, vom Betrachtungspunkt ausgehenden Sichtlinie angeordnet sein. Mit anderen Worten muss der Bildschirm nicht in einem Schacht oder Graben versenkt sein, um "unsichtbar" zu sein. Dadurch sammeln sich weniger oder sogar kein Dreck und Staub an. Zusätzlich oder alternativ kann vorgesehen sein, dass der Bildschirm bündig mit einer vom Betrachtungspunkt aus sichtbaren Interieuroberfläche des Innenraumverkleidungsteils des Kraftfahrzeugs abschließen kann. Der Bildschirm ist also in vorteilhafter Weise in Bezug auf die Oberflächenstruktur als Teil der Interieuroberfläche angepasst.

Die Vorteile der erfindungsgemäßen Anzeigevorrichtung kommen noch besser zur Geltung, falls das selbstleuchtende Bildschirmelement nur an einem der Anzeigebereiche an dem Innenraumverkleidungsteil des Kraftfahrzeugs angeordnet und der andere der Anzeigebereiche freistehend ist. Unter "freistehend" wird dabei verstanden, dass der freistehende Bereich an mindestens zwei Seiten, vorzugsweise drei Seiten, nicht an dem Innenraumverkleidungsteil montiert oder gelagert ist.

Gemäß einer weiteren Ausführungsform des erfindungsgemäßen Kraftfahrzeugs kann die Anzeigevorrichtung derart im Kraftfahrzeug angeordnet sein, dass der erste Anzeigebereich ausgehend von einem bestimmten Betrachtungspunkt des Benutzers einem Innenraum des Kraftfahrzeugs zugewandt ist, und wobei der zweite Anzeigebereich ausgehend von dem vorbestimmten Betrachtungspunkt von dem Benutzer abgewandt oder weggeknickt oder weggefaltet ist.

Die Anzeigevorrichtung ist besonders dann gut zu handhaben, falls sie in dem Kraftfahrzeug in einer Schalttafel des Kraftfahrzeugs oder in einer Tür des Kraftfahrzeugs oder in einer Dachkonsole des Kraftfahrzeugs oder in einer Mittelkonsole des Kraftfahrzeugs angeordnet ist.

Die oben gestellte Aufgabe wird gelöst durch ein Verfahren zum Betreiben eines Kraftfahrzeugs nach einer der oben beschriebenen Ausführungsformen des erfindungsgemäßen Kraftfahrzeugs, wobei das Verfahren ein Ausgeben eines Anzeigeinhaltes durch das selbstleuchtende Bildschirmelement der Anzeigevorrichtung des Kraftfahrzeugs als Verfahrensschritt aufweist. Hierzu kann zum Beispiel die Anzeigevorrichtung eine Steuereinrichtung aufweisen, also eine Gerätekomponente wie zum Beispiel einen Steuerchip oder eine Steuerplatine, die zum Empfangen und Auswerten von Signalen, sowie zum Erzeugen von Steuersignalen und Bildsignalen eingerichtet ist. Alternativ kann die beispielhafte Steuereinrichtung zum Beispiel eine Steuereinrichtung des Kraftfahrzeugs sein. Zum Durchführen des Verfahrens kann die Steuereinrichtung optional eine Prozessoreinrichtung aufweisen, also eine Gerätekomponente zur elektronischen Datenverarbeitung. Hierzu kann die Prozessoreinrichtung mindestens einen Mikrocontroller und/oder mindestens einen Mikroprozessor aufweisen. Auf einem Datenspeicher, zum Beispiel einer Speicherkarte oder einer Festplatte oder einem Speicherchip des Kraftfahrzeugs oder der Anzeigevorrichtung, oder der Steuereinrichtung, kann ein Programmcode abgelegt sein, der bei Ausführung durch die Prozessoreinrichtung die Steuereinrichtung dazu veranlasst, das erfindungsgemäße Verfahren durchzuführen. Es ergeben sich die oben genannten Vorteile.

Im Folgenden sind Ausführungsbeispiele der Erfindung beschrieben. Hierzu zeigt:
- Fig. 1: eine schematische Darstellung einer Ausführungsform der erfindungsgemäßen Ausgabevorrichtung in einem Längsschnitt;
- Fig. 2: eine schematische Darstellung einer Ausführungsform des erfindungsgemäßen Kraftfahrzeugs mit einem Bildschirmelement in einer Instrumententafel in einer perspektivischen Ansicht;
- Fig. 3: eine schematische Darstellung eines in Fahrzeuglängsrichtung durchgeführten Längsschnitts der Instrumententafel von Fig. 2;
- Fig. 4: eine schematische Darstellung einer Explosionsansicht des Bildschirmelements;
- Fig. 5: eine schematische Darstellung einer weiteren Ausführungsform des erfindungsgemäßen Kraftfahrzeugs mit einem Bildschirmelement in einer Instrumententafel in einer perspektivischen Ansicht;
- Fig. 6: eine schematische Darstellung zu einem Vergleichsbeispiel, in einer perspektivischen Ansicht;
- Fig. 7: eine schematische Darstellung zu dem Vergleichsbeispiel, in einer perspektivischen Ansicht;
- Fig. 8: eine schematische Darstellung aus einem ersten Blickwinkel auf die Anzeigefläche der in einem Kraftfahrzeug angeordneten Anzeigevorrichtung in einer perspektivischen Ansicht;
- Fig. 9: eine schematische Darstellung aus einem weiteren Blickwinkel auf die Anzeigefläche der in einem Kraftfahrzeug angeordneten Anzeigevorrichtung in einer perspektivischen Ansicht;
- Fig. 10: eine schematische Darstellung eines Versuchsaufbaus aus Sicht eines Betrachtungspunktes; und
- Fig. 11: eine schematische Darstellung des Versuchsaufbaus von einem von dem Betrachtungspunkt unterschiedlichen Blickpunkt aus gesehen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

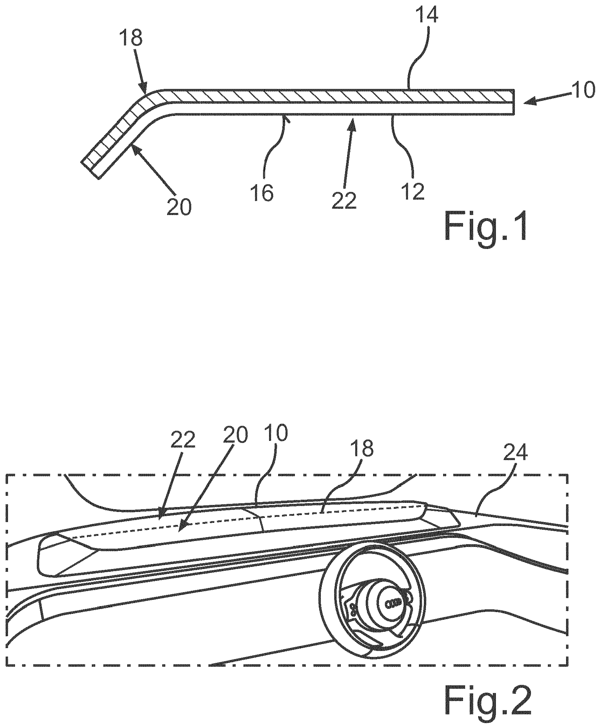

Das Beispiel der Fig. 1 veranschaulicht das Prinzip der erfindungsgemäßen Anzeigevorrichtung 10. Die Anzeigevorrichtung 10 weist ein selbstleuchtendes Bildschirmelement 12 auf, das zum Beispiel eine Bildschirmscheibe aufweisen kann. Das Bildschirmelement 12 kann als dem Fachmann aus dem Stand der Technik bekanntes Bildschirmelement 12 ausgestaltet sein, beispielsweise als LCD-Bildschirm oder TFT-Bildschirm. Das Bildschirmelement 12 vorzugsweise als flexibles OLED oder andersartiges flexibles Bildschirmelement 12 ausgestaltet sein. Ist die selektive Abschirmeinheit 14 als Folie ausgestaltet, kann die selektive Abschirmeinheit 14 vorzugsweise auf das Bildschirmelement 12 flächig laminiert sein. Dies erhöht die Qualität der Sichtbarkeit einer Anzeige der Anzeigevorrichtung 10.

Das Bildschirmelement 12 kann zum Beispiel zusammen mit der selektiven Abschirmeinheit 14 einen Bildschirm der Anzeigevorrichtung 10 bilden.

Das Bildschirmelement 12 kann zum Beispiel als transparente Scheibe ausgestaltet sein. Die selektive Abschirmeinheit 14 kann vorzugsweise flächig an dem Bildschirmelement 12 angeordnet sein, zum Beispiel auflaminiert oder aufgeklebt sein, oder die selektive Abschirmeinheit kann in das Bildschirmelement 12 integriert sein. Vorzugsweise kann eine gesamte Fläche des Bildschirmelements 12 von der selektiven Abschirmeinheit 14 abgedeckt sein.

Eine Anzeigefläche 16, also eine Oberfläche des Bildschirmelements 12, ist in einem Knickbereich 18 geknickt. Mit anderen Worten ist das Bildschirmelement 12 geknickt. Dadurch wird die Anzeigefläche 16 (und damit das Bildschirmelement 12) in einen ersten Anzeigebereich 20 und in einen zweiten Anzeigebereich 22 eingeteilt, die durch den Knickbereich 18 miteinander verbunden sind.

Die Fig. 2 zeigt ein Ausführungsbeispiel eines erfindungsgemäßen Kraftfahrzeugs 24, beispielsweise einen Personenkraftwagen. Eine Ausführungsform der Anzeigevorrichtung 10 ist dabei beispielhaft an einem Innenraumverkleidungsteil 26 angeordnet. Ein Knick des Innenraumverkleidungsteils 26, zum Beispiel einer Instrumententafel, kann dabei mit einem Knickbereich 18, der die Anzeigefläche 16 in den ersten Anzeigebereich 20 und den zweiten Anzeigebereich 22 unterteilt, übereinstimmen, sodass die Oberflächen übereinstimmen oder in einander übergehen. Mit anderen Worten ist die Anzeigevorrichtung 10, insbesondere das Bildschirmelement 12, nicht in einen Schacht oder Graben versenkt. Mit anderen Worten kann das Bildschirmelement 12 bündig mit einer vom Betrachtungspunkt aus sichtbaren Interieuroberfläche des Innenraumverkleidungsteils 26 abschließen. In vorteilhafter Weise ist das Bildschirmelement 12 und damit die Anzeigevorrichtung 10 in Bezug auf die Oberflächenstruktur als Teil der Interieuroberfläche angepasst. Das Erscheinungsbild der Innenraumverkleidung ist somit in vorteilhafter Weise durchgehend, das heißt ohne Versenkung oder Erhebung, im Bereich des Bildschirmrands ausgestaltet. Hierdurch wirkt die Integration des Bildschirms in das Innenraumverkleidungsteil optisch unauffällig oder nicht störend. Zudem gibt es keine Vertiefung, in welche zum Beispiel Schmutz oder ein Gegenstand fallen könnte.

Im Beispiel der Fig. 2 kann der erste Anzeigebereich 20, also, ausgehend von einem Betrachtungspunkt eines Insassen, diesem zugewandt sein, und der zweite Anzeigebereich 22 erscheint dem Benutzer entsprechend weggeknickt oder weggefaltet.

Alternativ kann das Innenraumverkleidungsteil 26 zum Beispiel eine Dachkonsole sein, eine Mittelkonsole oder eine Armlehne.

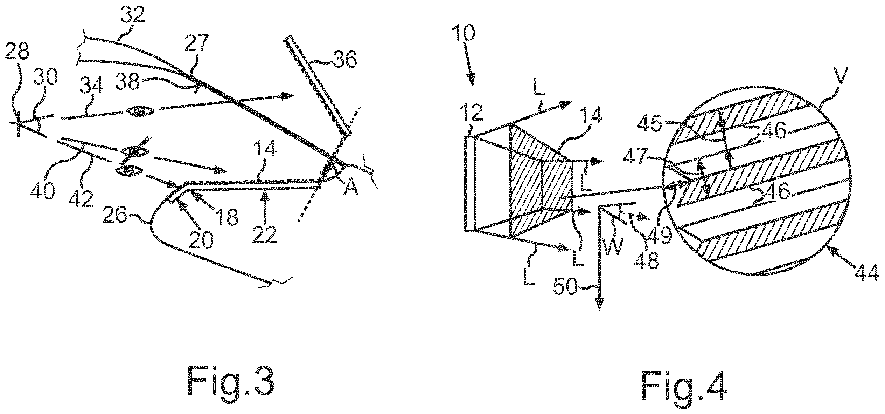

Die Fig. 3 zeigt eine Ausführungsform der erfindungsgemäßen Anzeigevorrichtung 10, der zum Beispiel die der Fig. 1 entsprechen kann. Im Folgenden wird dabei nur auf zusätzliche oder alternative Details eingegangen. Die Fig. 3 zeigt dabei einen Querschnitt durch das Innenraumverkleidungsteil 26, das zum Beispiel als Instrumententafel ausgestaltet sein kann.

Im Beispiel der Fig. 2 kann die Anzeigevorrichtung 10 zum Beispiel unterhalb einer Fensterscheibe 27 angeordnet sein, die an einer Innenseite den reflektierenden Oberflächenbereich 38 aufweisen kann. Beispielsweise kann auf einer Außenscheibe der Fensterscheibe 27 eine PDLC-Folie angeordnet sein. Falls diese transparent ist, kann ein Insasse auf die Straße schauen. Falls die PDLC-Folie opak ist, kann die Reflexion besser gesehen werden, falls der Insasse zum Beispiel in einem pilotierten Fahrmodus einen Film schaut.

Die Fensterscheibe 27 kann schräg über dem Bildschirm der Anzeigevorrichtung 10, der zum Beispiel das Bildschirmelement 12 und der Abschirmeinheit 14 umfasst, geneigt angeordnet sein. Von einem vorbestimmten Betrachtungspunkt 28 aus, der vor einer Kopfstütze des Fahrersitzes vorgesehen sein kann, kann ein Benutzer in einem reflektierenden Oberflächenbereich 38 der Fensterscheibe 27 eine Reflexion 36 eines Anzeigeinhalts des Bildschirms sehen. Durch die Anordnung aus Bildschirm und Fensterscheibe 27 kann somit ein Head-up-Display realisiert sein. Hierbei ist es aber nicht notwendig, den Bildschirm in einem Graben oder Schacht in das Innenraumverkleidungteil 26 zu versenken.

An dem Betrachtungspunkt 28 ist symbolisch ein Auge 30 eines Benutzers dargestellt. Zur weiteren Veranschaulichung sind noch ein Fahrzeugdach 32 und eine Sichtlinie 34 hin zur Reflexion 36 dargestellt. Vom Betrachtungspunkt 28 aus kann der Benutzer mit dem Auge 30 auf der Sichtlinie 34 auf dem Oberflächenbereich 38 der Fensterscheibe 27 die Reflexion 36 sehen. Die Reflexion 36 ist in Fig. 3 vom Betrachtungspunkt 28 aus gesehen hinter der Fensterscheibe 27 dargestellt, um hierdurch diesen räumlichen Eindruck darzustellen, den der Benutzer vom Betrachtungspunkt 28 aus hat. Auf der Sichtlinie 40 ist vom Betrachtungspunkt 17 aus der Anzeigeinhalt des zweiten Anzeigebereichs 22 nicht sichtbar. Die Sichtbarkeit und die Nicht-Sichtbarkeit sind in Fig. 2 durch ein Auge beziehungsweise ein durchgestrichenes Auge symbolisiert. Ein Abstand A des Bildschirms von dem reflektierenden Oberflächenbereich 38 kann größer als 0,5 Zentimeter, insbesondere größer als 1 Zentimeter sein. Der Abstand A kann so groß sein, wie es der Innenraum zulässt.

Der erste Anzeigebereich 20 kann einer direkten Sichtlinie 42 vom Betrachtungspunkt 28 aus liegen. Mit anderen Worten kann man vom Betrachtungspunkt 28 aus einen Anzeigeinhalt auf dem ersten Anzeigebereich 20 direkt sehen. Nur die Reflexion 36 zeigt jedoch, vom Betrachtungspunkt 28 aus, den Anzeigeinhalt des zweiten Anzeigebereichs 22.

Die Fig. 4 zeigt, wie der Bildschirm ausgestaltet sein kann, damit die in Fig. 3 veranschaulichten Sichtverhältnisse ermöglicht sind. Der Bildschirm kann zum Beispiel in dem Bildschirmelement 12, zum Beispiel einer transparenten Scheibe, und einer auf der transparenten Scheibe angeordneten Abschirmeinheit 14 realisiert sein. Eine Vergrößerung V zeigt eine Mikrostruktur 44, die die Abschirmeinheit 14 aufweisen kann. Die Abschirmeinheit 14 kann beispielsweise als Folie oder Scheibe ausgestaltet sein. Die Mikrostruktur 44 kann beispielsweise Lamellen 46 aufweisen, deren Abstand 45 und/oder Breite 47 und/oder Dicke 49 jeweils kleiner als 1 Millimeter, insbesondere kleiner als 100 Mikrometer sein kann. Durch die Mikrolamellen kann ein Durchlasswinkel für Licht L, das im Bildschirm erzeugt wird und welches den Anzeigeinhalt darstellt, auf einen Abstrahlwinkel W reduziert werden, der kleiner als 60 Grad, insbesondere kleiner als 50 Grad sein kann. Eine Hauptabstrahlrichtung oder Vorzugsrichtung 48 des zweiten Anzeigebereichs 22 kann dabei auf den Oberflächenbereich 38 ausgerichtet sein. Dagegen ergibt sich außerhalb des Abstrahlwinkels W zumindest eine Sperrrichtung 50, die auf den Betrachtungspunkt 28 ausgerichtet sein kann. In die Sperrrichtung 50 oder entlang der Sperrrichtung 50 strahlt der entsprechende Anzeigebereich 20, 22 aufgrund der Abschirmeinheit 14 kein Licht oder nur Licht mit einer Leuchtintensität, die vorzugsweise kleiner als 70 Prozent, insbesondere kleiner als 80 Prozent der Leuchtintensität entlang der Vorzugsrichtung 48 ist.

Der Winkel im Knickbereich 18, also der Winkel zwischen den beiden Anzeigebereichen 20, 22, kann vorzugsweise in einem Bereich von 25° bis inklusive 80° sein, vorzugsweise in einem Bereich von 60° bis inklusive 80°.

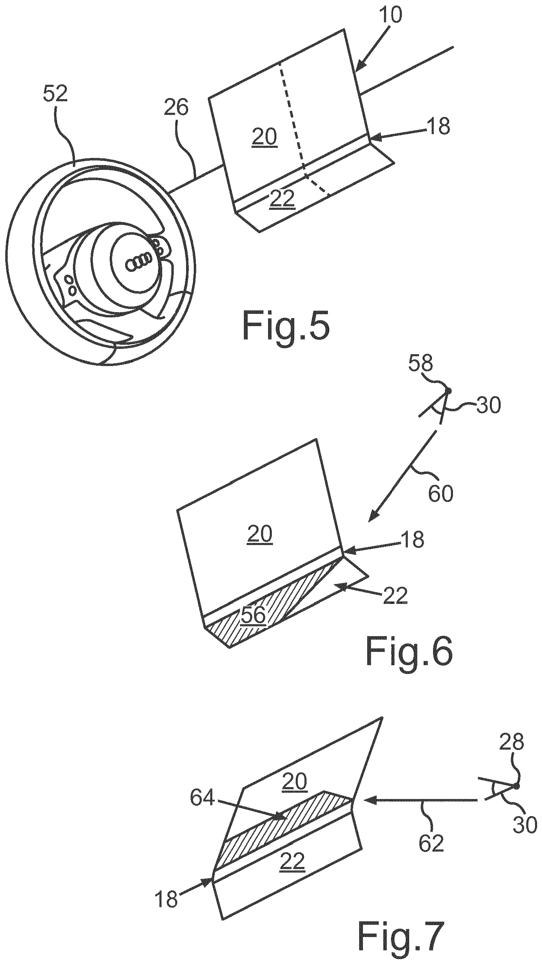

Die Fig. 5 zeigt ein weiteres Ausführungsbeispiel, bei der ein aus dem Bildschirmelement 12 und der Abschirmeinheit 14 gebildeter Bildschirm einer Anzeigevorrichtung 10 zum Beispiel als Mitteldisplay ausgestaltet sein kann, das zum Beispiel auf einer Instrumententafel neben einem Lenkrad 52 angeordnet sein kann. Dabei kann der erste Anzeigebereich 20 freistehend und der zweite Anzeigebereich 22 an dem Innenraumverkleidungsteil 26 angeordnet sein oder umgekehrt, oder total freistehend oder eingebaut, sodass die Anzeigefläche des Anzeigebereichs 22 mit einer Oberfläche des Innenraumverkleidungsteils 26 bündig abschließen kann.

Die Anzeigefläche kann zum Beispiel in einem Winkel von 30° einer Vertikalen angeordnet sein. Ein Knickradius, das heißt ein Radius ausgehend von der Mittellinie des Knickbereichs 18, kann beispielhaft in einem Bereich von 2 Millimeter bis inklusive 20 Millimeter liegen.

Alternativ zu einem flexiblen Bildschirmelement 12 kann das Bildschirmelement 12 zum Beispiel eine geknickte Bildschirmscheibe sein. Zum Beispiel kann sich das Bildschirmelement 12 aus zwei miteinander laminierten Bildschirmscheiben bilden. Optional kann dabei im Knickbereich 18 ein Displaybereich vorgesehen sein.

Die Fig. 6 und die Fig. 7 veranschaulichen noch einmal den vorteilhaften Effekt der erfindungsgemäßen Anzeigevorrichtung am Beispiel der Anzeigevorrichtung 10 der Fig. 5. Hierzu zeigt die Fig. 7 die beiden Anzeigebereiche 20, 22. Bei einem Knicken eines herkömmlichen Bildschirms würde sich eine Anzeige des ersten Anzeigebereichs 20 in einem Teilbereich 56 des zweiten Anzeigebereichs 22 spiegeln. Durch das erfindungsgemäße Prinzip, wonach die Anzeigefläche in zwei Anzeigebereiche 20, 22 durch den Knickbereich 18 unterteilt ist, und wobei auf der Anzeigefläche die selektive Abschirmeinheit 14 vorgesehen ist, erfolgt jedoch keine Spiegelung eines Anzeigeinhaltes des ersten Anzeigebereichs 20 in dem Teilbereich 56 des zweiten Anzeigebereichs 22, falls ein Betrachter von einem weiteren Betrachtungspunkt 58 aus in einer Sichtlinie 60 auf den zweiten Anzeigebereich 22 sieht.

Sieht der Betrachter von dem Betrachtungspunkt 28 in der Sichtlinie 62 auf den ersten Anzeigebereich 20, würde bei einer herkömmlichen Anzeigevorrichtung in einem Teilbereich 64 des ersten Anzeigebereichs 20 eine Spiegelung eines Anzeigeinhaltes des Anzeigebereichs 22 sichtbar sein. Aufgrund der Kombination des Knicks zwischen den zwei Anzeigebereichen 20, 22 im Knickbereich 18 der erfindungsgemäßen Anzeigevorrichtung 10 erscheint im Teilbereich 64 des ersten Anzeigebereich 20 jedoch keine Spiegelung.

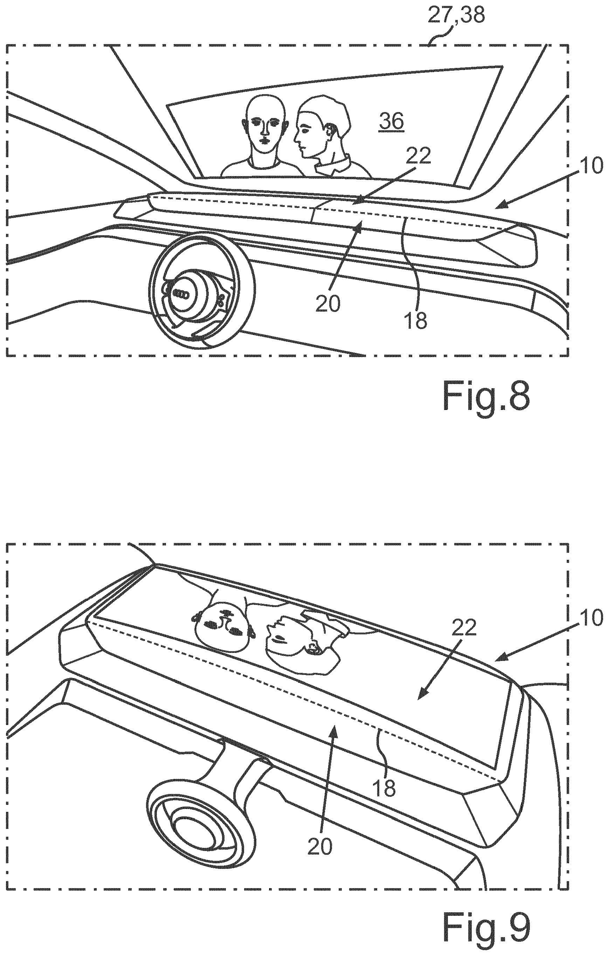

In der Fig. 8 ist noch einmal ein Anwendungsbeispiel der beispielhaften Anzeigevorrichtung 10 in der beispielhaften Anordnung der Fig. 2 gezeigt. Hierbei kann auf dem zweiten Anzeigebereich 22 zum Beispiel ein Film gezeigt werden, der als Reflexion 36 in der Fensterscheibe 27, also auf dem Oberflächenbereich 38, zu sehen ist. Der beispielhafte Film ist vom Betrachtungspunkt eines auf einem Fahrersitz sitzenden Betrachters auf dem zweiten Anzeigebereich 22 nicht sichtbar. Der Anzeigeinhalt des zweiten Anzeigebereichs 22 kann vorzugsweise spiegelverkehrt und entsprechend einem Ausgabewinkel auf die Fensterscheibe 27 und/oder einem vorgegebenen Blickwinkel so verzerrt ausgegeben werden, sodass er als Reflexion 36 seitenrichtig nach Spiegelung in der Fensterscheibe 27 unverzerrt erscheint.

Auf dem ersten Anzeigebereich 20 kann zum Beispiel eine Uhrzeit angezeigt werden, die für den Betrachter aus seiner sitzenden Position direkt auf dem ersten Anzeigebereich 20 sichtbar ist.

Die Fig. 9 zeigt die Anzeigevorrichtung 10 von einem anderen Betrachtungspunkt aus, wenn der Betrachter beispielsweise von oben auf die Anzeigevorrichtung 10 schaut. Dann ist der Film auf dem zweiten Anzeigebereich 22 sichtbar, der Anzeigeinhalt des abgeknickten, ersten Anzeigebereichs 10 jedoch nicht.

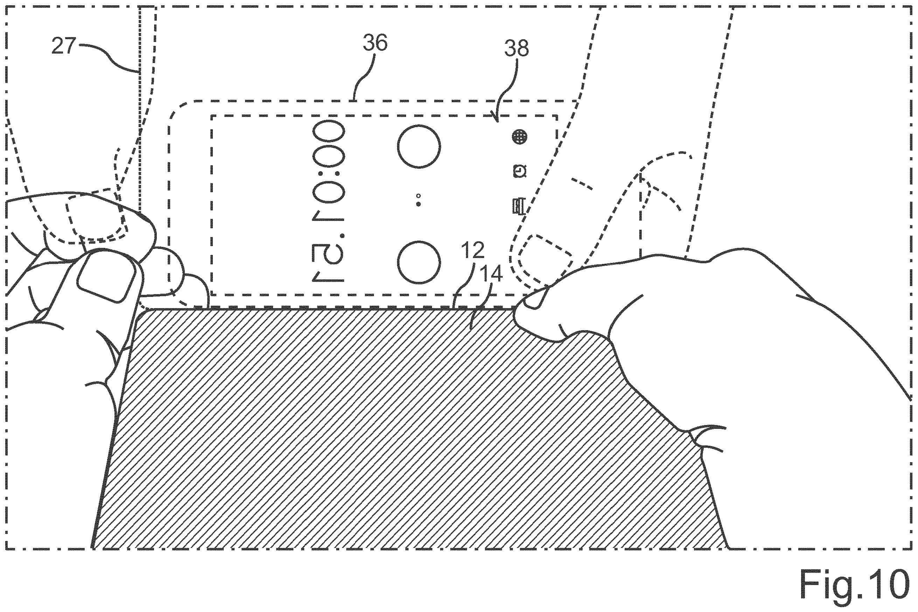

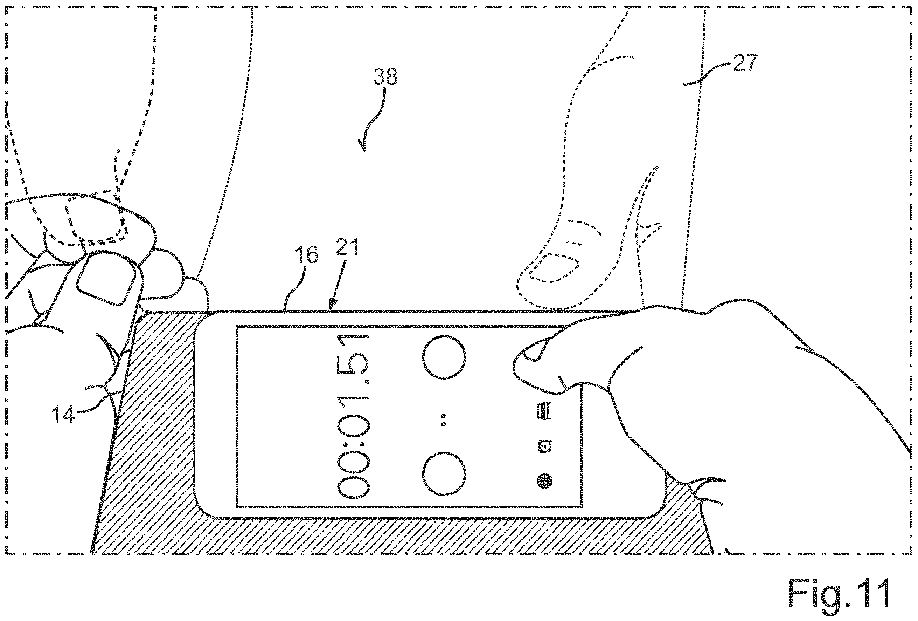

Fig. 10 und Fig. 11 veranschaulichen noch einmal die Wirkungsweise der hierbei verwendeten Abschirmeinheit 14. Fig. 10 zeigt aus der Perspektive eines Betrachtungspunkts 28 eine Abschirmeinheit 14 eines Bildschirms, sowie einen reflektierenden Oberflächenbereich 38, die beispielsweise durch eine Fensterscheibe 27 realisiert sein kann. Gestrichelt dargestellt ist eine Reflexion 36 eines Anzeigeinhalts, der durch den Bildschirm, insbesondere das Bildschirmelement 12, dargestellt wird und als Licht L durch die Abschirmeinheit 14 des Bildschirmelements 12 hindurch in Richtung auf den reflektierenden Oberflächenbereich 38 abgestrahlt wird. Dagegen wird in direkter Verbindung vom Bildschirmelement 12 hin zum Betrachtungspunkt kein Licht abgestrahlt, weshalb eine Bildschirmscheibe, also die Anzeigefläche, schwarz erscheint, was hier durch eine Schraffur symbolisiert ist.

Fig. 11 veranschaulicht die Anzeigefläche aus einer anderen Perspektive, die von der Perspektive des Betrachtungspunkts 28 verschieden ist. Zu erkennen ist, dass der Anzeigeinhalt 21 von der dargestellten Perspektive auf dem Bildschirm direkt sichtbar ist, das heißt das Licht L des Bildschirmelements 12 kann durch die Abschirmeinheit 14 hindurch direkt zum Auge des Betrachters gelangen.

Die Idee ist also, Displaybilder oder einen Anzeigeinhalt, die in einer Scheibe oder allgemein an einem reflektierenden Oberflächenbereich 38 gespiegelt werden, durch eine Abschirmeinheit 14, wie beispielsweise eine Lamellenfolie oder Shutterfolie, hindurch darzustellen. Das Urbild, das heißt der Anzeigeinhalt jeder der Anzeigebereiche 20, 22, ist abhängig davon sichtbar, von welchem Betrachtungspunkt der Betrachter auf den jeweiligen Anzeigebereich 20, 22 schaut.

Insgesamt veranschaulichen die Beispiele, wie durch die Erfindung eine Anzeigevorrichtung 10 mit einem geknickten Bildschirmelement 12 und einer selektiven Abschirmeinheit 14 bereitgestellt wird. Die Anzeigevorrichtung 10 kann vorzugsweise als geknicktes Display mit einer Shutterfolie ausgestaltet sein.

Das beispielhafte Display kann geknickt und vorzugsweise komplett mit dem selektiven Abschirmeinheit 14 versehen sein. So ist unter gewissen Blickwinkeln immer ein Teil des beispielhaften Displays, also einer der Anzeigebereiche 20, 22 sichtbar, und der jeweils andere Anzeigebereich 20, 22 unsichtbar. Dies kann ein ergonomischer Vorteil sein und vorteilhaft kann so eine Handhabung der Anzeigevorrichtung 10 verbessert werden.

Die Fig. 1 und die Fig. 2 zeigen ein Beispiel der Anzeigevorrichtung 10, die zum Beispiel als geknicktes Display ausgestaltet sein kann, und einen Teil haben kann, also einen Anzeigebereich 20, das zu den Insassen geneigt sein und einen Teil, also einen Anzeigebereich 22, der zum Beispiel horizontal auf zum Beispiel einer Schalttafel liegen kann.

In der Fig. 8 ist beispielhaft gezeigt, wie der zu den Insassen geneigte Teil, also der erste Anzeigebereich 20, von dem beispielhaften Display sichtbar ist, während der horizontal liegende Teil (der zweite Anzeigebereich 22) nicht sichtbar ist. Allerdings ist das Spiegelbild, also die Reflexion 36, des zweiten Teils sichtbar.

Die Fig. 9 zeigt, wie zum Beispiel von schräg oben das zu den Insassen geneigte beispielhafte Display, also der erste Anzeigebereich 20, nicht sichtbar ist, das horizontale Teil, also der zweite Anzeigebereich 22, jedoch schon.

Die Fig. 5 zeigt einen weiteren Anwendungsfall, in dem die Anzeigevorrichtung 10 zum Beispiel ein geknicktes Display umfassen kann. Mit der selektiven Abschirmeinheit 14 kann vermieden oder reduziert werden, dass sich jedes Displayteil, also jeder Anzeigebereich 20, 22, im anderen Teil spiegelt.

Vorteilhaft gibt es nur ein Display. Der Innenraum des Kraftfahrzeugs ist aufgeräumter. Es wird Bauraum gespart. Die Anzeigevorrichtung 10, das heißt das Display, kann so ausgelegt werden, dass nur die Anzeigebereiche 20, 22, die sichtbar sein müssen, sichtbar sind. Mit dem geknickten oder gebogenen Display kann ziemlich genau der Form von zum Beispiel einer Schalttafel gefolgt werden. Das geknickte Display spiegelt sich nicht in sich selbst.

Die Fig. 10 zeigt, wie ein Bild im Display in einer Fensterscheibe 27 reflektiert, während das Display selber nicht sichtbar ist. Die Fig. 11 zeigt, dass zum Beispiel durch Drehen das beispielhafte Display sichtbar ist, wobei die Ausrichtung der Lichtstrahlen durch die selektive Abschirmeinheit 14, beispielsweise eine Shutterfolie, die Reflexion 36 unsichtbar macht.

## Patentansprüche

1. Kraftfahrzeug (24), aufweisend
- eine Anzeigevorrichtung (10), die ein selbstleuchtendes Bildschirmelement (12) zum Anzeigen eines Anzeigeinhaltes aufweist, wobei eine Anzeigefläche (16) des selbstleuchtenden Bildschirmelements (12) durch einen Knickbereich (18) in einen ersten Anzeigebereich (20) und in einen zweiten Anzeigebereich (22) eingeteilt ist; und eine selektive Abschirmeinheit (14), welche Licht (L) von dem Bildschirmelement (12) einerseits entlang einer Vorzugsrichtung (48) durchlässt und andererseits entlang einer Sperrrichtung (50) blockiert und/oder aus der Sperrrichtung (50) auslenkt,
- einen von dem Bildschirmelement (12) der Anzeigevorrichtung (10) beabstandeten Oberflächenbereich (38), auf welchem von einem vorbestimmten Betrachtungspunkt aus eine Reflexion (36) des auf dem zweiten Anzeigebereich (22) angezeigten Anzeigeinhaltes sichtbar ist,
wobei die Anzeigevorrichtung (10) derart im Kraftfahrzeug angeordnet ist, sodass die Vorzugsrichtung (48) der selektiven Abschirmeinheit (14) im zweiten Anzeigebereich (22) auf den Oberflächenbereich (38) und die Sperrrichtung (50) im zweiten Anzeigebereich (22) auf den vorbestimmten Betrachtungspunkt ausgerichtet ist; und sodass im ersten Anzeigebereich (20) die Vorzugsrichtung (48) der selektiven Abschirmeinheit (14) auf den vorbestimmten Betrachtungspunkt und die Sperrrichtung (50) auf den Oberflächenbereich (38) ausgerichtet ist.

2. Kraftfahrzeug (24) nach Anspruch 1, wobei der Knickbereich (18) der Anzeigevorrichtung (10) einen Winkel von 45° bis inklusive 80°, vorzugsweise einen Winkel von 60° bis inklusive 80°, zwischen den beiden Anzeigebereichen (20, 22) definiert.

3. Kraftfahrzeug (24) nach einem der vorhergehenden Ansprüche,
wobei das selbstleuchtende Bildschirmelement (12) an einem Innenraumverkleidungsteil (26) des Kraftfahrzeugs (24) angeordnet ist, vorzugsweise wobei die geknickte Anzeigefläche (16) mit einer geknickten Oberfläche des Innenraumverkleidungsteils (26) übereinstimmt.

4. Kraftfahrzeug (24) nach einem der vorhergehenden Ansprüche,
wobei das selbstleuchtende Bildschirmelement (12) nur an einem der Anzeigebereiche (20) an einem Innenraumverkleidungsteil (26) des Kraftfahrzeugs (24) angeordnet und der andere der Anzeigebereiche (22) freistehend ist.

5. Kraftfahrzeug (24) nach einem der vorhergehenden Ansprüche,
wobei die Anzeigevorrichtung (10) derart im Kraftfahrzeug (24) angeordnet ist, sodass der erste Anzeigebereich (20) ausgehend von dem vorbestimmten Betrachtungspunkt einem Benutzer einem Innenraum des Kraftfahrzeugs (24) zugewandt und wobei der zweite Anzeigebereich (22) ausgehend von dem vorbestimmten Betrachtungspunkt dem Benutzer abgewandt ist.

6. Kraftfahrzeug (24) nach einem der vorhergehenden Ansprüche, wobei die Anzeigevorrichtung (10) in einer Schalttafel des Kraftfahrzeugs (24) oder in einer Tür des Kraftfahrzeugs (24) oder in einer Dachkonsole des Kraftfahrzeugs (24) oder in einer Mittelkonsole des Kraftfahrzeugs (24) angeordnet ist.

7. Verfahren zum Betreiben eines Kraftfahrzeugs (24) nach einem der vorhergehenden Ansprüche, aufweisend den durch die Anzeigevorrichtung (10) durchgeführten Schritt:
- Ausgeben eines Anzeigeinhaltes durch das selbstleuchtenden Bildschirmelement (12) der Anzeigevorrichtung (10) des Kraftfahrzeugs (24).

## Claims

1. Motor vehicle (24), having
- a display device (10) having a self-luminous screen element (12) for displaying display content, wherein a display surface (16) of the self-luminous screen element (12) is divided by a bend region (18) into a first display region (20) and a second display region (22); and a selective shielding unit (14) which transmits light (L) from the screen element (12) along a preferred direction (48) and blocks said light along a blocking direction (50) and/or deflects said light from the blocking direction (50),
- a surface region (38) which is remote from the screen element (12) of the display device (10) and on which a reflection (36) of the display content displayed on the second display region (22) can be seen from a predefined viewing point,
wherein the display device (10) is arranged in the motor vehicle such that the preferred direction (48) of the selective shielding unit (14) in the second display region (22) is oriented towards the surface region (38) and the blocking direction (50) in the second display region (22) is oriented towards the predetermined viewing point; and such that in the first display region (20) the preferred direction (48) of the selective shielding unit (14) is oriented towards the predetermined viewing point and the blocking direction (50) is oriented towards the surface region (38).

2. Motor vehicle (24) according to claim 1, wherein the bend region (18) of the display device (10) defines an angle of 45° to 80° inclusive, preferably an angle of 60° to 80° inclusive, between the first and second display regions (20, 22).

3. Motor vehicle (24) according to any of the preceding claims, wherein the self-luminous screen element (12) is arranged on an interior trim part (26) of the motor vehicle (24), preferably wherein the bent display surface (16) corresponds to a bent surface of the interior trim part (26).

4. Motor vehicle (24) according to any of the preceding claims, wherein the self-luminous screen element (12) is arranged only on one of the display regions (20) on an interior trim part (26) of the motor vehicle (24) and the other of the display regions (22) is free-standing.

5. Motor vehicle (24) according to any of the preceding claims, wherein the display device (10) is arranged in the motor vehicle (24) such that the first display region (20), proceeding from the predetermined viewing point, faces a user an interior of the motor vehicle (24) and wherein the second display region (22), proceeding from the predetermined viewing point, faces away from the user.

6. Motor vehicle (24) according to any of the preceding claims, wherein the display device (10) is arranged in a control panel of the motor vehicle (24) or in a door of the motor vehicle (24) or in a roof console of the motor vehicle (24) or in a centre console of the motor vehicle (24).

7. Method for operating a motor vehicle (24) according to any of the preceding claims, having the following step performed by the display device (10):
- outputting display content by means of the self-luminous screen element (12) of the display device (10) of the motor vehicle (24).

## Revendications

1. Véhicule automobile (24), présentant
- un dispositif d'affichage (10) qui présente un élément d'écran autolumineux (12) pour afficher un contenu d'affichage, dans lequel une surface d'affichage (16) de l'élément d'écran autolumineux (12) est divisée par une zone d'articulation (18) en une première zone d'affichage (20) et en une seconde zone d'affichage (22) ; et une unité de blindage sélective (14), laquelle, d'une part, laisse passer de la lumière (L) provenant de l'élément d'écran (12) le long d'une direction préférentielle (48) et, d'autre part, la bloque le long d'une direction de verrouillage (50) et/ou la dévie de la direction de verrouillage (50),
- une zone de surface (38) espacée de l'élément d'écran (12) du dispositif d'affichage (10), sur laquelle une réflexion (36) du contenu d'affichage affiché sur la seconde zone d'affichage (22) est visible à partir d'un point d'observation prédéterminé,
dans lequel le dispositif d'affichage (10) est disposé dans le véhicule automobile de sorte que la direction préférentielle (48) de l'unité de blindage sélective (14) dans la seconde zone d'affichage (22) est orientée vers la zone de surface (38) et la direction de verrouillage (50) dans la seconde zone d'affichage (22) est orientée vers le point d'observation prédéterminé ; et de sorte que dans la première zone d'affichage (20), la direction préférentielle (48) de l'unité de blindage sélective (14) est orientée vers le point d'observation prédéterminé et la direction de verrouillage (50) est orientée vers la zone de surface (38).

2. Véhicule automobile (24) selon la revendication 1, dans lequel la zone d'articulation (18) du dispositif d'affichage (10) définit un angle de 45° à 80° inclus, de préférence un angle de 60° à 80° inclus, entre les deux zones d'affichage (20, 22).

3. Véhicule automobile (24) selon l'une quelconque des revendications précédentes, dans lequel l'élément d'écran autolumineux (12) est disposé sur une pièce d'habillage intérieur (26) du véhicule automobile (24), de préférence dans lequel la surface d'affichage articulée (16) coïncide avec une surface articulée de la pièce d'habillage intérieur (26).

4. Véhicule automobile (24) selon l'une quelconque des revendications précédentes, dans lequel l'élément d'écran autolumineux (12) est disposé uniquement sur une des zones d'affichage (20) sur une pièce d'habillage intérieur (26) du véhicule automobile (24) et l'autre des zones d'affichage (22) est autonome.

5. Véhicule automobile (24) selon l'une quelconque des revendications précédentes, dans lequel le dispositif d'affichage (10) est disposé dans le véhicule automobile (24), de sorte que la première zone d'affichage (20) est orientée vers un utilisateur d'un espace intérieur du véhicule automobile (24) à partir du point d'observation prédéterminé et dans lequel la seconde zone d'affichage (22) est orientée à l'opposé de l'utilisateur à partir du point d'observation prédéterminé.

6. Véhicule automobile (24) selon l'une quelconque des revendications précédentes, dans lequel le dispositif d'affichage (10) est disposé dans un tableau de commande du véhicule automobile (24) ou dans une portière du véhicule automobile (24) ou dans une console de toit du véhicule automobile (24) ou dans une console centrale du véhicule automobile (24).

7. Procédé de fonctionnement d'un véhicule automobile (24) selon l'une quelconque des revendications précédentes, présentant l'étape mise en œuvre par le dispositif d'affichage (10) :
- d'émission d'un contenu d'affichage par l'élément d'écran autolumineux (12) du dispositif d'affichage (10) du véhicule automobile (24).
